# EUROPEAN PATENT APPLICATION

(11) **EP 4 510 677 A1**
(43) Date of publication of application: **19.02.2025**
(21) Application number: 22936966.5
(22) Date of filing: 15.04.2022
(51) Int. Cl.: H04W 24/00, H04W 84/12

(54) **WLAN SENSING MEASUREMENT METHOD AND APPARATUS, ELECTRONIC DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2022/087192
(87) International publication number: WO 2023/197321

(57) **Abstract**

Embodiments of the present disclosure relate to the technical field of mobile communications, and provide a WLAN sensing measurement method and apparatus, an electronic device and a storage medium. The WLAN sensing measurement method comprises: determining a first radio frame, wherein the first radio frame carries a first identification bit, and the first identification bit indicates whether the first radio frame is sent again in a target transmission opportunity (TXOP) or a target sensing time window; and sending the first radio frame. The embodiments of the present disclosure provide a method for indicating whether to send a same message frame multiple times.

## Description

### TECHNICAL FIELD

Embodiments of the present invention relate to the field of mobile communication technologies, and more particularly relate to a WLAN sensing measurement method, a WLAN sensing measurement apparatus, an electronic device and a storage medium.

### BACKGROUND

With the rapid development of mobile communication technologies, wireless fidelity (Wi-Fi) technologies have made great progress in transmission rate, throughput and the like. At present, the research contents of Wi-Fi technologies include 320MHz bandwidth transmission, aggregation and coordination of multiple frequency bands, and the like. For example, main application scenarios of Wi-Fi technologies include video transmission, augmented reality (AR), virtual reality (VR), and the like.

Among the Wi-Fi technologies currently studied, wireless local area network (WLAN) sensing technologies may be supported. For example, application scenarios include location discovery, proximity detection, and presence detection in dense environments (such as home environments and corporate environments), and the like.

The WLAN sensing measurement process generally includes a triggered frame based (triggered based sounding, TB) mode and a non-TB based sensing mode. In the TB-based mode, an access point (AP) is an initiator or transmitter; and in the Non-TB based mode, a station (STA) is an initiator or transmitter. Specifically, in a TB-based scenario, there may be a situation where some message frames need to be sent repeatedly, such as polling frames, and therefore it is necessary to provide a method for indicating whether the same message frame is sent multiple times to improve the TB-based sensing measurement process.

### SUMMARY

Embodiments of the present invention provide a WLAN sensing measurement method, a WLAN sensing measurement apparatus, an electronic device and a storage medium, so as to provide a method for indicating whether the same message frame is sent multiple times.

In an aspect, embodiments of the present invention provide a WLAN sensing measurement method, performed by a sensing initiator and including: determining a first radio frame, in which the first radio frame includes a first identification bit, which indicates whether the first radio frame is sent again within a target transmission opportunity (TXOP) or a target sensing time window; and sending the first radio frame.

In another aspect, embodiments of the present invention further provide a WLAN sensing measurement method, performed by a sensing responder and including: receiving a first radio frame, in which the first radio frame includes a first identification bit, which indicates whether a sensing initiator sends the first radio frame again within a target transmission opportunity (TXOP) or a target sensing time window; and determining whether to receive the first radio frame again within the target TXOP or the target sensing time window according to the first identification bit.

In another aspect, embodiments of the present invention further provide an electronic device. The electronic device is a sensing initiator and includes: a determining module configured to determine a first radio frame, in which the first radio frame includes a first identification bit, which indicates whether the first radio frame is sent again within a target transmission opportunity (TXOP) or a target sensing time window; and a sending module configured to send the first radio frame.

In another aspect, embodiments of the present invention further provide an electronic device. The electronic device is a sensing responder and includes: a first receiving module configured to receive a first radio frame, in which the first radio frame includes a first identification bit, which indicates whether a sensing initiator sends the first radio frame again within a target transmission opportunity (TXOP) or a target sensing time window; and a second receiving module configured to determine whether to receive the first radio frame again within the target TXOP or the target sensing time window according to the first identification bit.

In another aspect, embodiments of the present invention further provide a WLAN sensing measurement apparatus, applied to a sensing initiator and including: a radio frame determining module configured to determine a first radio frame, in which the first radio frame includes a first identification bit, which indicates whether the first radio frame is sent again within a target transmission opportunity (TXOP) or a target sensing time window; and a radio frame sending module configured to send the first radio frame.

In another aspect, embodiments of the present invention further provide a WLAN sensing measurement apparatus, applied to a sensing responder and including: a first frame receiving module configured to receive a first radio frame, in which the first radio frame includes a first identification bit, which indicates whether a sensing initiator sends the first radio frame again within a target transmission opportunity (TXOP) or a target sensing time window; and a second frame receiving module configured to determine whether to receive the first radio frame again within the target TXOP or the target sensing time window according to the first identification bit.

Embodiments of the present invention further provide an electronic device, including: a memory, a processor, and a computer program stored in the memory and executable on the processor, in which the processor is configured to implement the method according to one or more of the embodiments of the present invention when executing the program.

Embodiments of the present invention further provide a computer-readable storage medium having stored therein a computer program that, when executed by a processor, causes the method according to one or more of the embodiments of the present invention to be implemented.

In embodiments of the present invention, a first radio frame is determined and sent, in which the first radio frame includes a first identification bit, which indicates whether the first radio frame is sent again within a target transmission opportunity (TXOP) or a target sensing time window, such that the sensing responder determines whether to receive the first radio frame again according to the first identification bit, thus improving the TB-based sensing measurement process.

Additional aspects and advantages of embodiments of the present invention will be given in part in the following descriptions, which will become apparent from the following descriptions, or be learned from the practice of the present invention.

### BRIEF DESCRIPTION OF THE DRAWINGS

In order to more clearly illustrate the technical solutions of embodiments of the present invention, the drawings to be used in the description of the embodiments of the present invention will be briefly introduced below. Obviously, the drawings described below are only some embodiments of the present invention. For those of ordinary skill in the art, other drawings can also be obtained based on these drawings without creative work.
FIG. 1 is a first flow chart of a WLAN sensing measurement method provided in an embodiment of the present invention.
FIG. 2 is a first schematic diagram of a first example according to an embodiment of the present invention.
FIG. 3 is a second schematic diagram of a first example according to an embodiment of the present invention.
FIG. 4 is a third schematic diagram of a first example according to an embodiment of the present invention.
FIG. 5 is a schematic diagram of a second example according to an embodiment of the present invention.
FIG. 6 is a schematic diagram of a third example according to an embodiment of the present invention.
FIG. 7 is a second flow chart of a WLAN sensing measurement method provided in an embodiment of the present invention.
FIG. 8 is a third flow chart of a WLAN sensing measurement method provided in an embodiment of the present invention.
FIG. 9 is a fourth flow chart of a WLAN sensing measurement method provided in an embodiment of the present invention.
FIG. 10 is a fifth flow chart of a WLAN sensing measurement method provided in an embodiment of the present invention.
FIG. 11 is a first schematic block diagram of an electronic device provided in an embodiment of the present invention.
FIG. 12 is a second schematic block diagram of an electronic device provided in an embodiment of the present invention.
FIG. 13 is a third schematic block diagram of an electronic device provided in an embodiment of the present invention.

### DETAILED DESCRIPTION

The term "and/or" in embodiments of the present invention, which describes an association relationship of associated objects, means that there may be three relationships, for example, A and/or B, which may mean that A exists alone, A and B exist at the same time, and B exists alone. A character "/" generally indicates that contextual objects are in an "or" relationship.

The term "a plurality" in embodiments of the present invention refers to two or more, and other quantifiers are similar thereto.

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present invention. Instead, they are merely examples of apparatuses and methods consistent with some aspects related to the present invention as recited in the appended claims.

Terms used herein in the present invention are only for the purpose of describing specific embodiments, but should not be construed to limit the present invention. As used in the present invention and the appended claims, "a/an", "said" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in the present invention for describing various information, these information should not be limited by these terms. These terms are only used for distinguishing information of the same type from each other. For example, first information may also be referred to as second information, and similarly, the second information may also be referred to as the first information, without departing from the scope of the present invention. For example, as used herein, the term "if" may be construed to mean "when" or "upon" or "in response to determining" depending on the context.

The technical solutions in embodiments of the present invention will be described clearly and completely below with reference to the accompanying drawings in embodiments of the present invention. Apparently, the described embodiments are only some embodiments of the present invention, rather than all embodiments of the present invention. All other embodiments obtained by those of ordinary skill in the art based on embodiments of the present invention without making creative works belong to the protection scope of the present invention.

Embodiments of the present invention provide a WLAN sensing measurement method, a WLAN sensing measurement apparatus, an electronic device and a storage medium, so as to provide a method for indicating whether the same message frame is sent multiple times.

The method and the apparatus are based on a same application concept. Since the method and the apparatus solve the problem in a similar principle, regarding an implementation of the apparatus and the method, reference may be made to each other, and repeated parts thereof will not be elaborated.

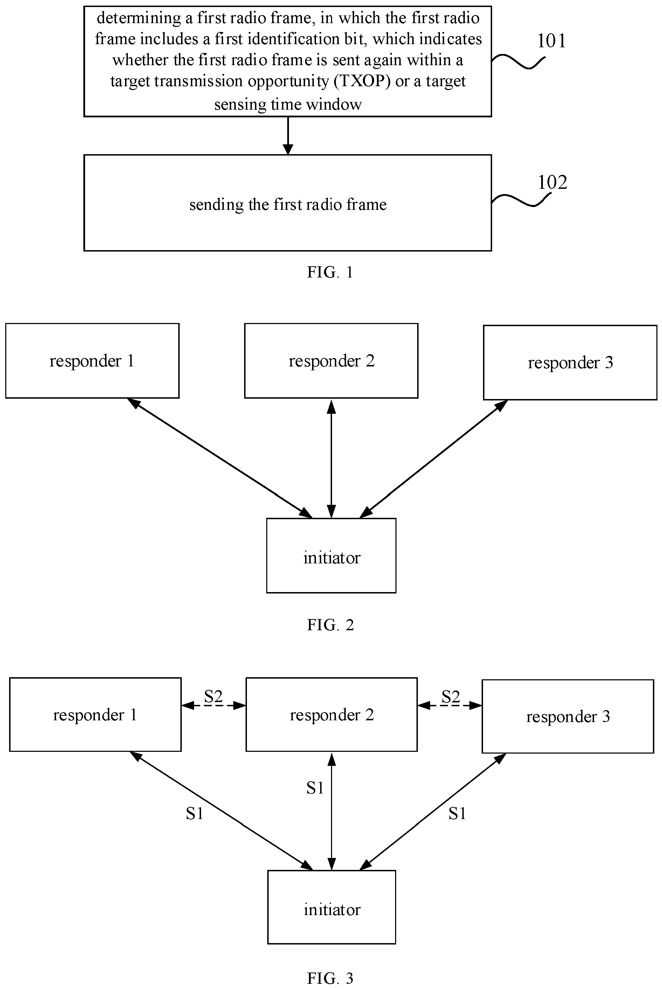

As shown in FIG. 1, an embodiment of the present invention provides a WLAN sensing measurement method. Optionally, the method may be performed by an electronic device, and the electronic device may be a network device, such as a sensing initiator. Specifically, the method may include the following steps.

In step 101, a first radio frame is determined, in which the first radio frame includes a first identification bit, which indicates whether the first radio frame is sent again within a target transmission opportunity (TXOP) or a target sensing time window.

As a first example, referring to FIGS. 2 to 4, the architecture of WLAN sensing to which the WLAN sensing measurement method provided in the embodiment of the present invention as well as the WLAN sensing process is applied are first introduced.

FIG. 2 shows a schematic diagram of the architecture of a WLAN sensing (process), in which a sensing initiator (or initiator) initiates WLAN sensing (for example, initiates a WLAN sensing session), and there may be multiple sensing responders (or sensing receivers) or responders responding thereto, as shown by responder 1, responder 2, and responder 3 in FIG. 2. When the sensing initiator initiates the WLAN sensing, multiple associated or unassociated WLAN sensing responders may respond thereto.

Referring to FIG. 3, the sensing initiator communicates with the sensing responder via a communication connection, as shown by communication connection S1; and the sensing responders communicate with each other via communication connection S2.

Each sensing initiator can be a client, and each sensing responder (in this example, i.e. sensing responder 1 to sensing responder 3) can be a station (STA) device or an access point (AP) device. In addition, the STA and the AP can play multiple roles in the WLAN sensing process. For example, in the WLAN sensing process, the STA can also serve as a sensing initiator, and the sensing initiator may be a sensing transmitter, a sensing receiver, or both, or neither. In the WLAN sensing process, the sensing responder may also be a sensing transmitter, a sensing receiver, or both.

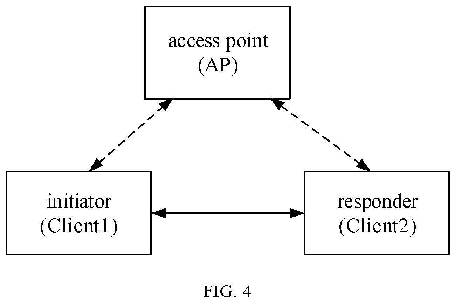

As another architecture, as shown in FIG. 4, the sensing initiator and the sensing responder can both be clients, and the two can communicate with each other by connecting to the same access point (AP) device. In FIG. 4, Client1 is the sensing initiator, and Client2 is the sensing responder.

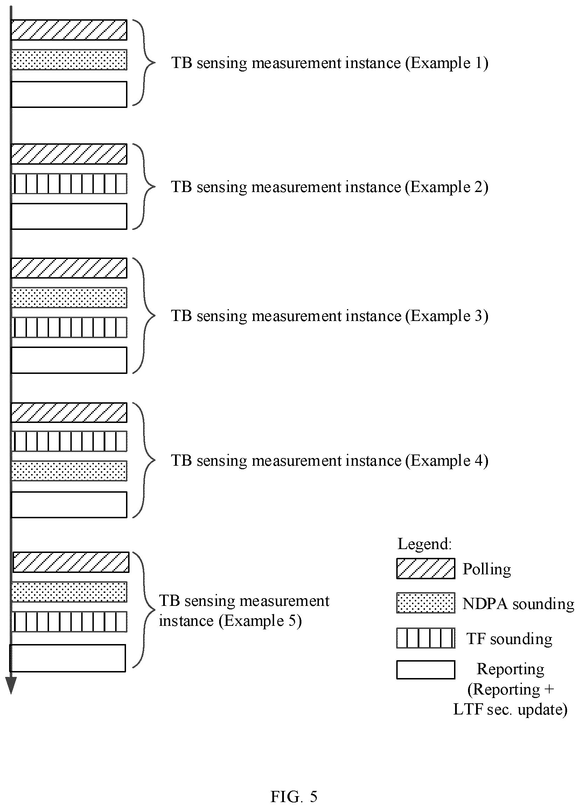

As a second example, referring to FIG. 5, multiple sensing measurement instances of a TB-based sensing measurement process are shown. In Examples 1 to 5, the sensing measurement processes all include polling, detection and reporting (Reporting + LTF sec. update) phases. In each example, the detection may include only NDPA sounding or TF sounding; and the detection may also include both NDPA sounding and TF sounding at the same time.

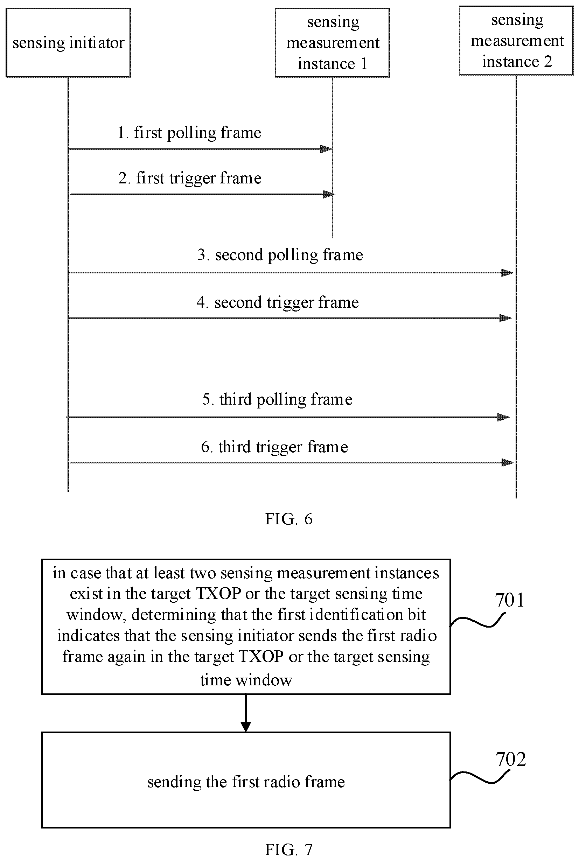

In a TB-based scenario, there may be a situation where the same message frame needs to be sent multiple times, that is, the first radio frame in the embodiment of the present invention. The first radio frame is, for example, a polling frame or a trigger frame (TF). The polling frame is used to detect station devices participating in the sensing measurement, and the TF trigger frame is used to allocate uplink sensing measurement resources to the station devices participating in the uplink sensing measurement. For example, the first radio frame also includes a second identification bit, in which when the second identification bit is set to a first identification value, it identifies the first radio frame as a polling frame; and when the second identification bit is set to a second identification value, it identifies the first radio frame as an (uplink) sensing trigger frame. It can be understood that, in the embodiment of the present invention, the target transmission opportunity (TXOP) or the target sensing time window is in a time period corresponding to the same sensing measurement setup identifier (WLAN sensing measurement setup ID) in which the first radio frame is sent in step 102.As a third example, referring to FIG. 6, taking the first radio frame as a polling frame as an example, in a WLAN sensing measurement process corresponding to the same sensing measurement setup identifier, multiple measurement instances are included, such as sensing measurement instance 1 and sensing measurement instance 2 as shown in FIG. 6, then it is necessary to send the polling frame multiple times to indicate that the WLAN sensing measurement process includes multiple sensing measurement instances. For example, the sensing initiator executes step 1 to send a first polling frame, and executes step 2 to send a first trigger frame for sensing measurement instance 1; and executes step 3 to send a second polling frame, and executes step 4 to send a second trigger frame for sensing measurement instance 2. Alternatively, in a measurement instance, because the sensing measurement bandwidth cannot meet the needs of all responders participating in the sensing measurement, there may be a situation where multiple TF frames are sent, for example, for sensing measurement instance 2, the initiator executes step 3 to send a second polling frame, executes step 4 to send a second trigger frame, then also executes step 5 to send a third polling frame; and executes step 6 to send a third trigger frame. Therefore, in the embodiment of the present invention, the first radio frame includes a first identification bit, which indicates whether the first radio frame is sent again within the target transmission opportunity (TXOP) or the target sensing time window to indicate whether the sensing initiator will send the first radio frame again later. For example, when the first identification bit is set to a first parameter value, for example, the first parameter value is "1", the first radio frame is sent again within the target TXOP or the target sensing time window; and when the first identification bit is set to a second parameter value, for example, the second parameter value is "0", it indicates that the first radio frame is no longer sent within the TXOP or the target sensing time window.

It can be understood that the target TXOP is a TXOP for sending the first radio frame in step 102, and the target sensing time window is a sensing time window for sending the first radio frame in step 102.

In step 102, the first radio frame is sent.

The initiator sends a first radio frame, which includes a first identification bit therein, so that the sensing responder determines whether to receive the first radio frame again according to the first identification bit, thus improving the triggered TB-based sensing measurement process.

Referring to FIG. 7, an embodiment of the present invention further discloses a WLAN sensing measurement method. Optionally, the method may be performed by an electronic device, and the electronic device may be a network device, such as a sensing initiator. Specifically, the method may include the following steps.

In step 701, in case that at least two sensing measurement instances exist in the target TXOP or the target sensing time window, it is determined that the first identification bit indicates that the sensing initiator sends the first radio frame again in the target TXOP or the target sensing time window.

Regarding the architecture of WLAN sensing to which the WLAN sensing measurement method provided in the embodiment of the present invention is applied as well as the WLAN sensing process, reference is made to the aforementioned first example; and regarding the TB-based sensing measurement process, reference is made to the aforementioned second example, which will not be repeated here.

In a TB-based scenario, when at least two sensing measurement instances exist in the target TXOP or the target sensing time window, the initiator sends the first radio frame at least once in each sensing measurement instance, and the first radio frame is, for example, a polling frame or a trigger frame (TF).

Taking the first radio frame as a polling frame as an example, in a WLAN sensing measurement process corresponding to the same sensing measurement setup identifier (WLAN sensing measurement setup ID), if multiple measurement instances are included, it is necessary to send the polling frame multiple times to indicate that the WLAN sensing measurement process contains multiple sensing measurement instances. Therefore, in an embodiment of the present invention, the first radio frame includes a first identification bit, which indicates whether the first radio frame is sent again within the target TXOP or the target sensing time window to indicate whether the sensing initiator will send the first radio frame again later. It can be understood that the target TXOP is a TXOP for sending the first radio frame in step 702, and the target sensing time window is a sensing time window for sending the first radio frame in step 702.

In step 702, the first radio frame is sent.

The initiator sends a first radio frame, which includes a first identification bit therein, so that the sensing responder determines that the first radio frame needs to be received again according to the first identification bit, thus improving the TB-based sensing measurement process.

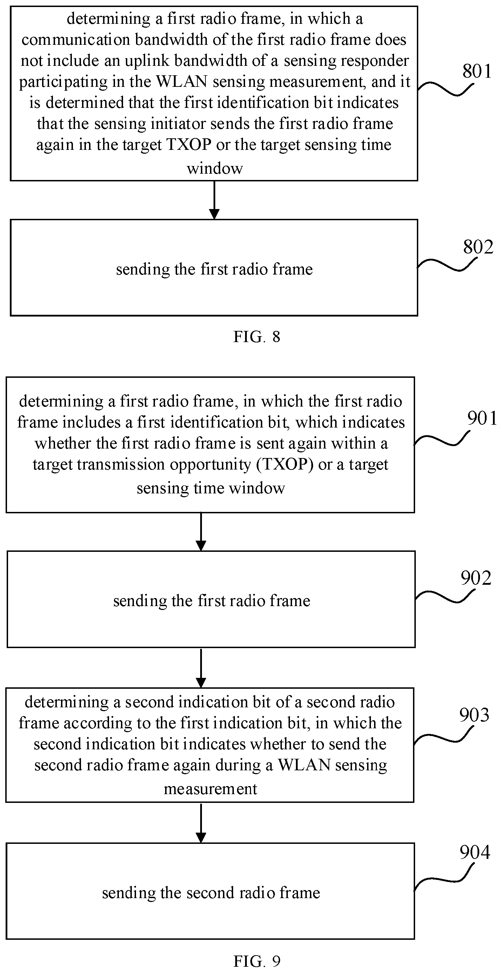

Referring to FIG. 8, an embodiment of the present invention further discloses a WLAN sensing measurement method. Optionally, the method may be performed by an electronic device, and the electronic device may be a network device, such as a sensing initiator. Specifically, the method may include the following steps.

In step 801, a first radio frame is determined, in which a communication bandwidth of the first radio frame does not include an uplink bandwidth of a sensing responder participating in the WLAN sensing measurement, and it is determined that the first identification bit indicates that the sensing initiator sends the first radio frame again in the target TXOP or the target sensing time window.

Regarding the architecture of WLAN sensing to which the WLAN sensing measurement method provided in the embodiment of the present invention is applied as well as the WLAN sensing process, reference is made to the aforementioned first example; and regarding the TB-based sensing measurement process, reference is made to the aforementioned second example, which will not be repeated here.

In a TB-based scenario, the communication bandwidth of the first radio frame does not include the uplink bandwidth of the sensing responder participating in the WLAN sensing measurement. For example, taking the first radio frame as a polling frame, the communication bandwidth (for example, the uplink communication bandwidth UL BW) of the polling frame is 80MHz, and the UL BW of a sensing responder in the sensing measurement instance is 240MHz, then the communication bandwidth of the polling frame cannot fully detect all the sensing responders participating in the WLAN sensing measurement, and the first radio frame will be sent multiple times. Therefore, it is determined that the first identification bit indicates that the sensing initiator will send the first radio frame again within the target TXOP or the target sensing time window.

It can be understood that the target TXOP is a TXOP for sending the first radio frame in step 802, and the target sensing time window is a sensing time window for sending the first radio frame in step 802.

In step 802, the first radio frame is sent.

The initiator sends a first radio frame, which includes a first identification bit therein, so that the sensing responder determines that the first radio frame needs to be received again according to the first identification bit, thus improving the TB-based sensing measurement process.

Referring to FIG. 9, an embodiment of the present invention further discloses a WLAN sensing measurement method. Optionally, the method may be performed by an electronic device, and the electronic device may be a network device, such as a sensing initiator. Specifically, the method may include the following steps.

In step 901, a first radio frame is determined, in which the first radio frame includes a first identification bit, which indicates whether the first radio frame is sent again within a target transmission opportunity (TXOP) or a target sensing time window.

In step 902, the first radio frame is sent.

In step 903, a second indication bit of a second radio frame is determined according to the first indication bit, in which the second indication bit indicates whether to send the second radio frame again during a WLAN sensing measurement.

Taking the first radio frame as a polling frame and the second radio frame as a TF frame as an example, when a first indication bit in the polling frame indicates that the sensing initiator sends the first radio frame again within the target TXOP or the target sensing time window, that is, the first indication bit of the polling frame indicates that there is a subsequent polling frame to be sent, then a second indication bit needs to be set in an uplink TF (trigger frame sounding) trigger frame accordingly to indicate that there is a subsequent trigger frame to be sent, that is, the second indication bit indicates that the second radio frame is sent again during the WLAN sensing measurement.

In step 904, the second radio frame is sent.

Optionally, in an embodiment of the present invention, the first identification bit is in a common information field of the first radio frame;
the first radio frame is a trigger frame, a receiving address of the first radio frame is a broadcast address or a multicast address, and a sending address of the first radio frame is a media access control (MAC) address of the sensing initiator;
the second identification bit is in a common information field of the second radio frame;
   and/or
the second radio frame is a trigger frame, a receiving address of the second radio frame is a broadcast address or a multicast address, and a sending address of the second radio frame is a MAC address of the sensing initiator.

The first identification bit and the second identification bit are both in common information (common info) fields, the polling frame and the TF sounding trigger frame are both of types of trigger frames. For example, in the common info field, different type values are used to indicate the polling frame and the TF sounding trigger frame. For example, when the type value is a first identification value, it indicates that the first radio frame is a polling frame; and when the type value is set to a second identification value, it indicates that the first radio frame is an (uplink) sensing trigger frame.

The receiving addresses of the first radio frame and the second radio frame are broadcast addresses or multicast addresses, and the sending addresses of the first radio frame and the second radio frame are a media access control (MAC) address of the sensing initiator.

In an embodiment of the present invention, a first radio frame is determined and sent, in which the first radio frame includes a first identification bit, which indicates whether the first radio frame is sent again within a target transmission opportunity (TXOP) or a target sensing time window, so that the sensing responder determines whether to receive the first radio frame again according to the first identification bit, thus improving the TB-based sensing measurement process.

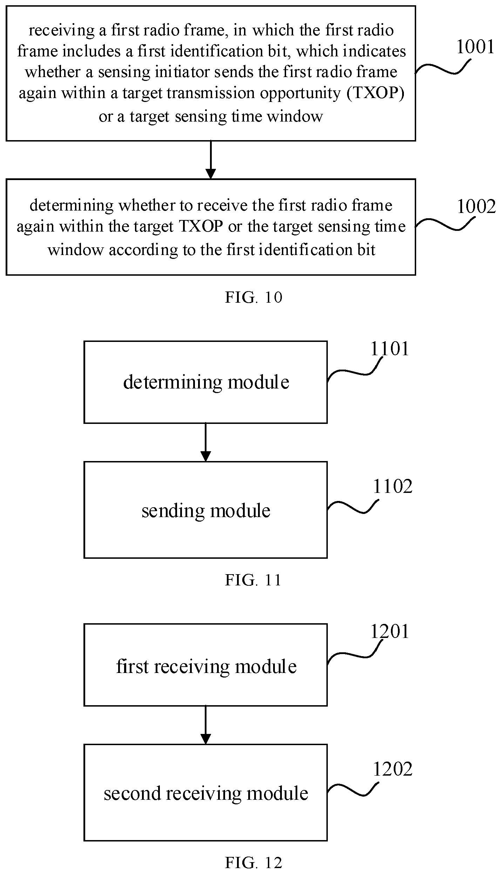

Referring to FIG. 10, an embodiment of the present invention provides a WLAN sensing measurement method. Optionally, the method may be performed by an electronic device, and the electronic device may be a sensing responder. Specifically, the method may include the following steps.

In step 1001, a first radio frame is received, in which the first radio frame includes a first identification bit, which indicates whether the first radio frame is sent again within a target transmission opportunity (TXOP) or a target sensing time window.

Regarding the architecture of WLAN sensing to which the WLAN sensing measurement method provided in the embodiment of the present invention is applied as well as the WLAN sensing process, reference is made to the aforementioned first example; and regarding the TB-based sensing measurement process, reference is made to the aforementioned second example, which will not be repeated here.

In a TB-based scenario, there may be a situation where the same message frame needs to be sent multiple times, that is, the first radio frame in the embodiment of the present invention. The first radio frame is, for example, a polling frame or a trigger frame (TF). For example, the first radio frame also includes a second identification bit, in which when the second identification bit is set to a first identification value, it identifies the first radio frame as a polling frame; and when the second identification bit is set to a second identification value, it identifies the first radio frame as an (uplink) sensing trigger frame.

Taking the first radio frame as a polling frame as an example, in a WLAN sensing measurement process corresponding to the same sensing measurement setup identifier (WLAN sensing measurement setup ID), multiple measurement instances are included, then it is necessary to send the polling frame multiple times to indicate that the WLAN sensing measurement process includes multiple sensing measurement instances. Alternatively, in a measurement instance, because the sensing measurement bandwidth cannot meet the needs of all responders participating in the sensing measurement, there may be a situation where multiple TF frames are sent. Therefore, in the embodiment of the present invention, a first identification bit in the first radio frame is obtained, and the first identification bit indicates whether the first radio frame is sent again within the target transmission opportunity (TXOP) or the target sensing time window to indicate whether the sensing initiator will send the first radio frame again later. For example, when the first identification bit is set to a first parameter value, for example, the first parameter value is "1", the first radio frame is sent again within the target TXOP or the target sensing time window; and when the first identification bit is set to a second parameter value, for example, the second parameter value is "0", it indicates that the first radio frame is no longer sent within the TXOP or the target sensing time window.

It can be understood that the target TXOP is a TXOP for receiving the first radio frame in step 1002, and the target sensing time window is a sensing time window for receiving the first radio frame in step 1002.

In step 1002, whether to receive the first radio frame again within the target TXOP or the target sensing time window is determined according to the first identification bit.

The sensing responder determines whether the sensing initiator sends the first radio frame again according to the first identification bit, so as to determine whether to receive the first radio frame again, thus improving the TB-based sensing measurement process.

Optionally, in an embodiment of the present invention, after receiving the first radio frame, the method further includes: determining a second identification bit of a second radio frame according to the first identification bit, in which the second identification bit indicates whether the sensing initiator sends the second radio frame again during a WLAN sensing measurement; and determining whether to receive the second radio frame again during the WLAN sensing measurement according to the second identification bit.

Taking the first radio frame as a polling frame and the second radio frame as a TF frame as an example, when a first indication bit in the polling frame indicates that the sensing initiator sends the first radio frame again within the target TXOP or the target sensing time window, that is, the first indication bit of the polling frame indicates that there is a subsequent polling frame to be sent, then a second indication bit in the respective uplink TF (trigger frame sounding) trigger frame indicates that there is a subsequent trigger frame to be sent, that is, the second indication bit indicates that the second radio frame is received again during the WLAN sensing measurement.

Optionally, in an embodiment of the present invention, the first identification bit is in a common information field of the first radio frame;
the first radio frame is a trigger frame, a receiving address of the first radio frame is a broadcast address or a multicast address, and a sending address of the first radio frame is a MAC address of the sensing initiator;
the second identification bit is in a common information field of the second radio frame;
   and/or
the second radio frame is a trigger frame, a receiving address of the second radio frame is a broadcast address or a multicast address, and a sending address of the second radio frame is a MAC address of the sensing initiator.

The first identification bit and the second identification bit are both in common information (common info) fields, in which the polling frame and the TF sounding trigger frame are both of types of trigger frames. For example, in the common info field, different type values are used to indicate the polling frame and the TF sounding trigger frame. For example, when the type value is a first identification value, it indicates that the first radio frame is a polling frame; and when the type value is set to a second identification value, it indicates that the first radio frame is an (uplink) sensing trigger frame.

The receiving addresses of the first radio frame and the second radio frame are broadcast addresses or multicast addresses, and the sending addresses of the first radio frame and the second radio frame are a media access control (MAC) address of the sensing initiator.

In an embodiment of the present invention, a first radio frame is received, in which the first radio frame includes a first identification bit, which indicates whether the first radio frame is sent again within a target transmission opportunity (TXOP) or a target sensing time window, so that the sensing responder determines whether to receive the first radio frame again according to the first identification bit, thus improving the TB-based sensing measurement process.

Referring to FIG. 11, based on the same principle as the method provided in the embodiments of the present invention, an embodiment of the present invention further provides an electronic device. The electronic device is a sensing initiator. The electronic device includes: a determining module 1101 configured to determine a first radio frame, in which the first radio frame includes a first identification bit, which indicates whether the first radio frame is sent again within a target transmission opportunity (TXOP) or a target sensing time window; and a sending module 1102 configured to send the first radio frame.

Optionally, in an embodiment of the present invention, the determining module 1101 includes a first determining submodule configured to determine that the first identification bit indicates that the sensing initiator sends the first radio frame again in the target TXOP or the target sensing time window in case that at least two sensing measurement instances exist in the target TXOP or the target sensing time window; and/or a second determining submodule configured to determine that the first identification bit indicates that the sensing initiator sends the first radio frame again in the target TXOP or the target sensing time window in case that a communication bandwidth of the first radio frame does not include an uplink bandwidth of a sensing responder participating in a WLAN sensing measurement.

Optionally, in an embodiment of the present invention, the electronic device includes: a first identification bit determining module configured to determine a second identification bit of a second radio frame according to the first identification bit, in which the second identification bit indicates whether the second radio frame is sent again during a WLAN sensing measurement; and send the second radio frame.

Optionally, in an embodiment of the present invention, the first identification bit determining module is configured for the second identification bit indicating that the second radio frame is sent again during the WLAN sensing measurement in case that the first identification bit indicates that the sensing initiator sends the first radio frame again in the target TXOP or the target sensing time window.

Optionally, in an embodiment of the present invention, the first identification bit is in a common information field of the first radio frame;
the first radio frame is a trigger frame, a receiving address of the first radio frame is a broadcast address or a multicast address, and a sending address of the first radio frame is a MAC address of the sensing initiator;
the second identification bit is in a common information field of the second radio frame;
   and/or
the second radio frame is a trigger frame, a receiving address of the second radio frame is a broadcast address or a multicast address, and a sending address of the second radio frame is a MAC address of the sensing initiator.

In the embodiment of the present invention, a first radio frame is determined by the determining module 1101, and the first radio frame is sent by the sending module 1102, in which the first radio frame includes a first identification bit, which indicates whether the first radio frame is sent again within a target transmission opportunity (TXOP) or a target sensing time window, so that the sensing responder determines whether to receive the first radio frame again according to the first identification bit, thus improving the TB-based sensing measurement process.

An embodiment of the present invention further provides a WLAN sensing measurement apparatus, applied to a sensing initiator. The apparatus includes: a radio frame determining module configured to determine a first radio frame, in which the first radio frame includes a first identification bit, which indicates whether the first radio frame is sent again within a target transmission opportunity (TXOP) or a target sensing time window; and a radio frame sending module configured to send the first radio frame.

The apparatus also includes other modules of the electronic device in the aforementioned embodiment, which will not be described in detail here.

Referring to FIG. 12, based on the same principle as the method provided in the embodiments of the present invention, an embodiment of the present invention further provides an electronic device. The electronic device is a sensing responder. The electronic device includes: a first receiving module 1201 configured to receive a first radio frame, in which the first radio frame includes a first identification bit, which indicates whether a sensing initiator sends the first radio frame again within a target transmission opportunity (TXOP) or a target sensing time window; and a second receiving module 1202 configured to determine whether to receive the first radio frame again within the target TXOP or the target sensing time window according to the first identification bit.

Optionally, in an embodiment of the present invention, the electronic device includes: a second identification bit determining module configured to determine a second identification bit of a second radio frame according to the first identification bit, in which the second identification bit indicates whether the second radio frame is sent again during a WLAN sensing measurement; and determine whether to receive the second radio frame again during the WLAN sensing measurement according to the second identification bit.

Optionally, in an embodiment of the present invention, the first identification bit is in a common information field of the first radio frame;
the first radio frame is a trigger frame, a receiving address of the first radio frame is a broadcast address or a multicast address, and a sending address of the first radio frame is a MAC address of the sensing initiator;
the second identification bit is in a common information field of the second radio frame;
   and/or
the second radio frame is a trigger frame, a receiving address of the second radio frame is a broadcast address or a multicast address, and a sending address of the second radio frame is a MAC address of the sensing initiator.

In the embodiment of the present invention, a first radio frame is received by the first receiving module 1201, in which the first radio frame includes a first identification bit, which indicates whether the first radio frame is sent again within a target transmission opportunity (TXOP) or a target sensing time window, so that the second receiving module 1202 determines whether to receive the first radio frame again according to the first identification bit, thus improving the TB-based sensing measurement process.

An embodiment of the present invention further provides a WLAN sensing measurement apparatus, applied to a sensing responder. The apparatus includes: a first frame receiving module configured to receive a first radio frame, in which the first radio frame includes a first identification bit, which indicates whether a sensing initiator sends the first radio frame again within a target transmission opportunity (TXOP) or a target sensing time window; and a second frame receiving module configured to determine whether to receive the first radio frame again within the target TXOP or the target sensing time window according to the first identification bit..

The apparatus also includes other modules of the electronic device in the aforementioned embodiment, which will not be described in detail here.

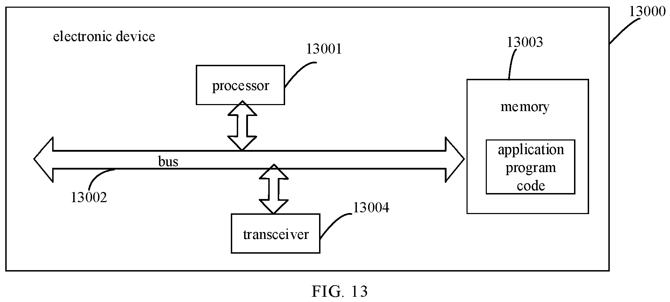

In an optional embodiment, an embodiment of the present invention further provides an electronic device, as shown in FIG. 13. The electronic device 13000 shown in FIG. 13 may be a server, including: a processor 13001 and a memory 13003. The processor 13001 and the memory 13003 are connected, for example, via a bus 13002. Optionally, the electronic device 13000 may further include a transceiver 13004. It should be noted that in actual applications, the number of the transceivers 13004 is not limited to one, and the structure of the electronic device 13000 does not constitute a limitation on the embodiments of the present invention.

The processor 13001 may be a central processing unit (CPU), a general-purpose processor, a digital signal processor (DSP), an application specific integrated circuit (ASIC), a field programmable gate array (FPGA), or other programmable logic devices, transistor logic devices, hardware components, or any combination thereof. The processor 13001 may implement or execute various exemplary logical blocks, modules, and circuits described in conjunction with the contents of the present invention. The processor 13001 may also be a combination that implements computing functions, such as a combination of one or more microprocessors, a combination of a DSP and a microprocessor, etc.

The bus 13002 may include a path to transmit information between the above components. The bus 13002 may be a peripheral component interconnect (PCI) bus, an extended industry standard architecture (EISA) bus, or the like. The bus 13002 can be divided into an address bus, a data bus, a control bus, etc. For ease of representation, FIG. 13 illustrates only one thick line, but this does not mean that there is only one bus or one type of bus.

The memory 13003 may be a read only memory (ROM) or other types of static storage devices that may store static information and instructions, or a random access memory (RAM) or other types of dynamic storage devices that may store information and instructions; and the memory 13003 may also be an electrically erasable programmable read only memory (EEPROM), a compact disc read only memory (CD-ROM), or other optical disk storage media or optical disc storage media (including a compressed optical disk, a laser disk, an optical disk, a digital versatile disk, a Blu-ray disk, etc.), a magnetic disk storage medium or other magnetic storage devices, or any other medium that may be used to carry or store the desired program codes in the form of instructions or data structures and may be accessed by a computer, but is not limited to this.

The memory 13003 is configured to store application program codes for executing the solution of the present invention, and the execution is controlled by the processor 13001. The processor 13001 is used to execute the application program codes stored in the memory 13003 to implement the contents shown in the aforementioned method embodiments.

The electronic device includes, but is not limited to: a mobile terminal such as a mobile phone, a laptop, a digital broadcast receiver, a personal digital assistant (PDA), a tablet computer (PAD), a portable multimedia player (PMP), a vehicle-mounted terminal (such as a vehicle-mounted navigation terminal), etc.; and a fixed terminal such as a digital television (TV), a desktop computer, etc. The electronic device shown in FIG. 13 is merely an example and should not limit the functions and use scope of the embodiments of the present invention in any way.

The server provided in the present invention may be an independent physical server, a server cluster or a distributed system composed of a plurality of physical servers, or a cloud server that provides basic cloud computing services such as cloud services, cloud databases, cloud computing, cloud functions, cloud storage, network services, cloud communications, middleware services, domain name services, security services, content distribution networks (CDNs), as well as big data and artificial intelligence platforms. The terminal may be a smart phone, a tablet computer, a laptop computer, a desktop computer, a smart speaker, a smart watch, etc., but is not limited thereto. The terminal and the server may be connected directly or indirectly via wired or wireless communication, which is not limited in the present invention.

An embodiment of the present invention provides a computer-readable storage medium, on which a computer program is stored. When the computer program runs on a computer, the computer may execute the corresponding contents in the aforementioned method embodiments.

It should be understood that, although the steps in the flowchart of the accompanying drawings are displayed sequentially as indicated by the arrows, these steps are not necessarily executed sequentially in an order indicated by the arrows. Unless otherwise specified herein, there is no strict order limitation for the execution of these steps, and these steps may be executed in other orders. Moreover, at least some of the steps in the flowchart of the accompanying drawings may include a plurality of sub-steps or a plurality of stages. These sub-steps or stages are not necessarily executed at the same time, but may be executed at different times. The order of execution of these steps is not necessarily sequential, but these steps may be executed in turn or alternately with other steps or at least some of sub-steps or stages of other steps.

It should be noted that the above-mentioned computer-readable medium in the present invention may be a computer-readable signal medium, or a computer-readable storage medium, or any combination of the above two media. The computer-readable storage medium may be, for example, but is not limited to, an electronic, magnetic, optical, electromagnetic, infrared, or semiconducting system, apparatus, or device, or any combination of the foregoing. The more specific examples of the computer-readable storage medium may include, but are not limited to, an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing. In the present invention, the computer-readable storage medium may be any tangible medium that can contain or store a program for use by or in connection with an instruction execution system, apparatus, or device. In the present invention, the computer-readable signal medium may include a data signal propagated in a baseband or as a part of a carrier wave, in which computer-readable program codes are carried. Such a propagated data signal may take a variety of forms, including but not limited to electromagnetic signals, optical signals, or any suitable combination of the foregoing. The computer-readable signal medium may also be any computer-readable medium other than computer-readable storage media, which may send, propagate or transport a program for use by or in conjunction with an instruction execution system, apparatus or device. The program code embodied on the computer-readable medium may be transmitted using any appropriate medium, including but not limited to: a wire, an optical cable, a radio frequency (RF) medium, or the like, or any suitable combination of the foregoing.

The above-mentioned computer-readable medium may be included in the above-mentioned electronic device, or may exist independently without being incorporated into the electronic device.

The above-mentioned computer-readable medium carries one or more programs. When the one or more programs are executed by the electronic device, the electronic device is configured to execute the method shown in the above embodiments.

According to one aspect of the present invention, a computer program product or a computer program is provided, including computer instructions stored in a computer-readable storage medium. A processor of a computer device reads the computer instructions from the computer-readable storage medium and executes the computer instructions, so that the computer device executes the method in the above various optional implementations.

The computer program codes for performing operations in the present invention may be written in one or more programming languages or their combination, including object-oriented programming languages such as Java, Smalltalk, C++, or conventional procedural programming languages such as "C" or similar programming languages. The program codes may be executed entirely on a user computer, partly on the user computer, as a stand-alone software package, partly on the user computer and partly on a remote computer, or entirely on the remote computer or a server. In case of involving a remote computer, the remote computer may be connected to the user computer through any type of network, including a local area network (LAN) or a wide area network (WAN), or may be connected to an external computer (e.g., through the Internet using an Internet service provider).

The flowcharts and block diagrams in the accompanying drawings illustrate possibly implemented architectures, functions, and operations of systems, methods, and computer program products according to various embodiments of the present invention. In this regard, each block in the flowchart or block diagram may represent a module, a program segment, or a portion of code, which contains one or more executable instructions for implementing the specified logical functions. It should also be noted that, in some alternative implementations, the functions noted in the block may occur out of the order noted in the drawings. For example, two blocks shown in succession may actually be executed substantially in parallel, or they may sometimes be executed in the reverse order, depending on the functionality involved. It should also be noted that each block in the block diagram and/or flowchart, and a combination of blocks in the block diagram and/or flowchart, may be implemented by a dedicated hardware-based system that performs the specified functions or operations, or may be implemented by a combination of dedicated hardware and computer instructions.

The modules described and involved in the embodiments of the present invention may be implemented in software or hardware. The name of a module does not, in some cases, constitute a limitation on the module itself. For example, module A can also be described as "module A for performing operation B".

The above description is only a preferred embodiment of the present invention and an illustration of the technical principles used. Those skilled in the art should understand that the scope of disclosure involved in the present invention is not limited to the technical solutions formed by a specific combination of the above-mentioned technical features, but should also cover other technical solutions formed by any combination of the above-mentioned technical features or their equivalent features without departing from the above-mentioned concepts of the present invention. For example, the above-mentioned features are replaced with the technical features with similar functions disclosed in the present invention (but not limited to this) to form a technical solution.

## Claims

1. A WLAN sensing measurement method, performed by a sensing initiator, comprising:
determining a first radio frame, wherein the first radio frame comprises a first identification bit, which indicates whether the first radio frame is sent again within a target transmission opportunity TXOP or a target sensing time window; and
sending the first radio frame.

2. The WLAN sensing measurement method of claim 1, wherein determining the first radio frame comprises:
in case that at least two sensing measurement instances exist in the target TXOP or the target sensing time window, determining that the first identification bit indicates that the sensing initiator sends the first radio frame again in the target TXOP or the target sensing time window; and/or
a communication bandwidth of the first radio frame not comprising an uplink bandwidth of a sensing responder participating in a WLAN sensing measurement, determining that the first identification bit indicates that the sensing initiator sends the first radio frame again in the target TXOP or the target sensing time window.

3. The WLAN sensing measurement method of claim 1, after sending the first radio frame, comprising:
determining a second identification bit of a second radio frame according to the first identification bit, wherein the second identification bit indicates whether the second radio frame is sent again during a WLAN sensing measurement; and
sending the second radio frame.

4. The WLAN sensing measurement method of claim 3, wherein determining the second identification bit of the second radio frame according to the first identification bit comprises:
in case that the first identification bit indicates that the sensing initiator sends the first radio frame again in the target TXOP or the target sensing time window, the second identification bit indicating that the second radio frame is sent again during the WLAN sensing measurement.

5. The WLAN sensing measurement method of claim 3, wherein the first identification bit is in a common information field of the first radio frame;
the first radio frame is a trigger frame, a receiving address of the first radio frame is a broadcast address or a multicast address, and a sending address of the first radio frame is a media access control (MAC) address of the sensing initiator;
the second identification bit is in a common information field of the second radio frame;
and/or
the second radio frame is a trigger frame, a receiving address of the second radio frame is a broadcast address or a multicast address, and a sending address of the second radio frame is a MAC address of the sensing initiator.

6. A WLAN sensing measurement method, performed by a sensing responder, comprising:
receiving a first radio frame, wherein the first radio frame comprises a first identification bit, which indicates whether a sensing initiator sends the first radio frame again within a target transmission opportunity TXOP or a target sensing time window; and
determining whether to receive the first radio frame again within the target TXOP or the target sensing time window according to the first identification bit.

7. The WLAN sensing measurement method of claim 6, after receiving the first radio frame, comprising:
determining a second identification bit of a second radio frame according to the first identification bit, wherein the second identification bit indicates whether the sensing initiator sends the second radio frame again during a WLAN sensing measurement; and
determining whether to receive the second radio frame again during the WLAN sensing measurement according to the second identification bit.

8. The WLAN sensing measurement method of claim 7, wherein the first identification bit is in a common information field of the first radio frame;
the first radio frame is a trigger frame, a receiving address of the first radio frame is a broadcast address or a multicast address, and a sending address of the first radio frame is a media access control (MAC) address of the sensing initiator;
the second identification bit is in a common information field of the second radio frame;
and/or
the second radio frame is a trigger frame, a receiving address of the second radio frame is a broadcast address or a multicast address, and a sending address of the second radio frame is a MAC address of the sensing initiator.

9. An electronic device, as a sensing initiator, comprising:
a determining module configured to determine a first radio frame, wherein the first radio frame comprises a first identification bit, which indicates whether the first radio frame is sent again within a target transmission opportunity TXOP or a target sensing time window; and
a sending module configured to send the first radio frame.

10. An electronic device, as a sensing responder, comprising:
a first receiving module configured to receive a first radio frame, wherein the first radio frame comprises a first identification bit, which indicates whether a sensing initiator sends the first radio frame again within a target transmission opportunity TXOP or a target sensing time window; and
a second receiving module configured to determine whether to receive the first radio frame again within the target TXOP or the target sensing time window according to the first identification bit.

11. A WLAN sensing measurement apparatus, applied to a sensing initiator, comprising:
a radio frame determining module configured to determine a first radio frame, wherein the first radio frame comprises a first identification bit, which indicates whether the first radio frame is sent again within a target transmission opportunity TXOP or a target sensing time window; and
a radio frame sending module configured to send the first radio frame.

12. A WLAN sensing measurement apparatus, applied to a sensing responder, comprising:
a first frame receiving module configured to receive a first radio frame, wherein the first radio frame comprises a first identification bit, which indicates whether a sensing initiator sends the first radio frame again within a target transmission opportunity TXOP or a target sensing time window; and
a second frame receiving module configured to determine whether to receive the first radio frame again within the target TXOP or the target sensing time window according to the first identification bit.

13. An electronic device, comprising:
a memory;
a processor; and
a computer program stored in the memory and executable on the processor,
wherein the processor is configured to implement the method according to any one of claims 1 to 8 when executing the program.

14. A computer-readable storage medium having stored therein a computer program that, when executed by a processor, causes the method according to any one of claims 1 to 8 to be implemented.
